# EUROPEAN PATENT APPLICATION

(11) **EP 3 528 478 A1**
(43) Date of publication of application: **21.08.2019**
(21) Application number: 17872785.5
(22) Date of filing: 08.11.2017
(51) Int. Cl.: H04M 1/00, G06F 3/01

(54) **ELECTRONIC APPARATUS, PROGRAM, AND CONTROL METHOD**

(30) Priority: 15.11.2016 JP 2016222618
(71) Applicant: Kyocera Corporation, Kyoto-shi, Kyoto 612-8501 (JP)
(72) Inventor: UENO Yasuhiro, Kyoto-shi Kyoto 612-8501 (JP); TANABE Shigeki, Kyoto-shi Kyoto 612-8501 (JP); MORITA Hideki, Kyoto-shi Kyoto 612-8501 (JP); MASUIKE Isao, Kyoto-shi Kyoto 612-8501 (JP); YAMAUCHI Koutaro, Kyoto-shi Kyoto 612-8501 (JP); SAKUMA Manabu, Kyoto-shi Kyoto 612-8501 (JP)
(74) Representative: Viering, Jentschura & Partner mbB Patent- und Rechtsanwälte
(86) International application number: PCT/JP2017/040309
(87) International publication number: WO 2018/092660

(57) **Abstract**

An electronic device includes a proximity sensor, a communication interface that communicates with an external device, and a controller that, when an abnormality notification signal is acquired from the external device by the communication interface, transmits a signal for remotely operating the external device based on a gesture detected by the proximity sensor. Furthermore, the external device may include a first external device and a second external device, and the controller may remotely operate the second external device via the first external device.

## Description

### CROSS-REFERENCE TO RELATED APPLICATION

The present application claims priority to and the benefit of Japanese Patent Application No. 2016-222618 filed November 15, 2016, the entire contents of which are incorporated herein by reference.

### TECHNICAL FIELD

The present disclosure relates to an electronic device, a program, and a control method.

### BACKGROUND

Electronic devices, such as smartphones and tablets, typically include a touch panel. A user typically controls such an electronic device by touching the touch panel. A recently developed electronic device detects a gesture, performed by the user at a distance from a terminal, using a proximity sensor such as an infrared sensor and then processes an input operation corresponding to the gesture.

### CITATION LIST

### Patent Literature

PTL 1: JP2015-225493A

### SUMMARY

An electronic device according to an embodiment of the present disclosure includes a proximity sensor, a communication interface configured to communicate with an external device, and a controller. When an abnormality notification signal is acquired from the external device by the communication interface, the controller is configured to transmit a signal for remotely operating the external device based on a gesture detected by the proximity sensor.

An electronic device according to an embodiment of the present disclosure includes a proximity sensor, a communication interface configured to communicate with an external device, and a controller. When an abnormality notification signal is acquired from the external device by the communication interface, the controller is configured to place a telephone call to the external device based on a gesture detected by the proximity sensor.

A program according to an embodiment of the present disclosure is for an electronic device including a proximity sensor and a communication interface configured to communicate with an external device. The program causes the electronic device to acquire, using the communication interface, an abnormality notification signal from the external device. The program causes the electronic device to transmit a signal for remotely operating the external device based on a gesture detected by the proximity sensor.

A program according to an embodiment of the present disclosure is for an electronic device including a proximity sensor and a communication interface configured to communicate with an external device. The program causes the electronic device to acquire, using the communication interface, an abnormality notification signal from the external device. The program causes the electronic device to place a telephone call to the external device based on a gesture detected by the proximity sensor.

A control method according to an embodiment of the present disclosure is a control method of an electronic device including a proximity sensor and a communication interface configured to communicate with an external device. The control method includes acquiring, using the communication interface, an abnormality notification signal from the external device. The control method includes transmitting a signal for remotely operating the external device based on a gesture detected by the proximity sensor.

A control method according to an embodiment of the present disclosure is a control method of an electronic device including a proximity sensor and a communication interface configured to communicate with an external device. The control method includes acquiring, using the communication interface, an abnormality notification signal from the external device. The control method includes placing a telephone call to the external device based on a gesture detected by the proximity sensor.

### BRIEF DESCRIPTION OF THE DRAWINGS

In the accompanying drawings:
FIG. 1 is a schematic diagram of an electronic device according to an embodiment of the present disclosure;
FIG. 2 illustrates a user operating an electronic device with a gesture;
FIG. 3 illustrates example conditions in which the user operates an electronic device with a gesture;
FIG. 4 illustrates example conditions of linkage between an electronic device and an external device;
FIG. 5 is a schematic diagram of an external device that communicates with an electronic device according to an embodiment;
FIG. 6 illustrates an example of gesture processing information stored in a storage;
FIG. 7 is a flowchart illustrating an example of processing executed by an electronic device according to an embodiment of the present disclosure;
FIG. 8 is a flowchart illustrating an example of processing executed by a first external device that communicates with an electronic device according to an embodiment of the present disclosure; and
FIG. 9 is a flowchart illustrating an example of processing executed by a second external device that communicates with an electronic device according to an embodiment of the present disclosure.

### DETAILED DESCRIPTION

### Electronic Device Configuration

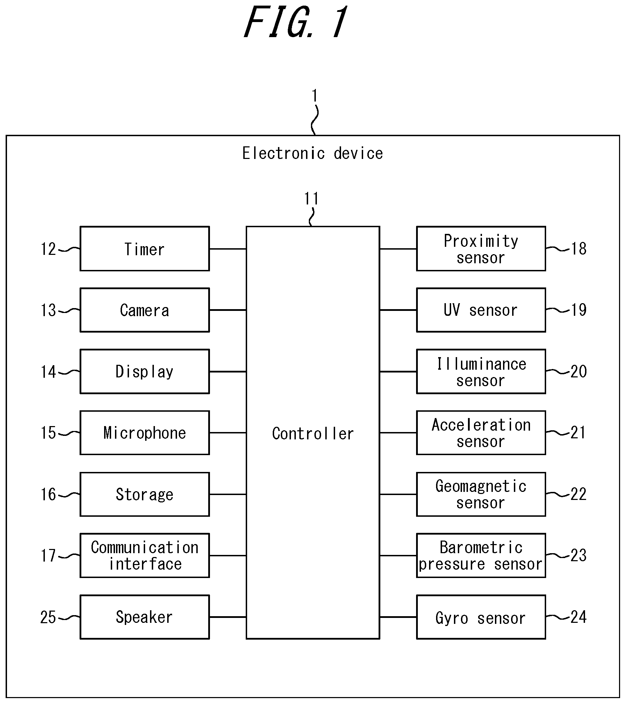

As illustrated in FIG. 1, an electronic device 1 of an embodiment includes a display 14, a storage 16, a communication interface 17, a proximity sensor 18 (gesture sensor), and a controller 11. The electronic device 1 further includes a timer 12, a camera 13, a microphone 15, a UV sensor 19, an illuminance sensor 20, an acceleration sensor 21, a geomagnetic sensor 22, a barometric pressure sensor 23, a gyro sensor 24, and a speaker 25. FIG. 1 is only an example, and the electronic device 1 need not include all of the components in FIG. 1. Also, the electronic device 1 may include components other than those illustrated in FIG. 1.

The display 14 displays a screen. The screen includes, for example, at least one of characters, images, symbols, graphics, and the like. The display 14 may be a liquid crystal display (LCD), an organic electro-luminescence (EL) panel, an inorganic EL panel, or the like. In the present embodiment, the display 14 is a touchscreen display. The touchscreen display detects contact by a finger, a stylus, or other object and identifies the contact position. The display 14 can simultaneously detect a plurality of positions contacted by fingers, styli, or other objects.

The storage 16 functions as a memory storing programs and data. The storage 16 temporarily stores the processing results of the controller 11. The storage 16 may include any appropriate storage device, such as a semiconductor storage device or a magnetic storage device. The storage 16 may also include a plurality of types of storage devices. The storage 16 may include a combination of a portable storage medium, such as a memory card, and an apparatus for reading the storage medium.

The programs stored in the storage 16 include applications that run in the foreground or the background and a control program that supports operations of the applications. For example, the applications cause the controller 11 to execute processing corresponding to a gesture. The control program is, for example, an operating system (OS). The applications and control program may be installed on the storage 16 by communication through the communication interface 17 or from a storage medium.

The communication interface 17 is for communicating over a wired or wireless connection. The communication method of the communication interface 17 in an embodiment is prescribed by a wireless communication standard. For example, a cellular phone communication standard such as 2G, 3G, or 4G may be used as the wireless communication standard. Examples of cellular phone communication standards include Long Term Evolution (LTE), Wideband Code Division Multiple Access (W-CDMA), CDMA2000, Personal Digital Cellular (PDC), Global System for Mobile Communications (GSM® (GSM is a registered trademark in Japan, other countries, or both)), and Personal Handy-phone System (PHS). Examples of wireless communication standards include Worldwide Interoperability for Microwave Access (WiMAX), IEEE 802.11, Bluetooth® (Bluetooth is a registered trademark in Japan, other countries, or both), Infrared Data Association (IrDA), and Near Field Communication (NFC). The communication interface 17 may support one or more of the aforementioned communication standards.

Without contact, the proximity sensor 18 detects the relative distance to an object near the electronic device 1, the movement direction of the object, and the like. The proximity sensor 18 in an embodiment includes four visible light photodiodes that can detect white, red, green, and blue. The proximity sensor 18 can measure the relative distance from the object. The proximity sensor 18 also includes one infrared light emitting diode (LED) serving as a light source and four infrared photodiodes that detect the up, down, left, and right directions. The proximity sensor 18 emits infrared light, from the infrared LED serving as a light source, onto an object. The proximity sensor 18 detects the movement direction of the object by the difference in time at which reflected light from the object is incident on each of the infrared photodiodes. The proximity sensor 18 can thus detect an operation by an air gesture (gesture) that the user of the electronic device 1 performs without touching the electronic device 1.

The controller 11 is a processor such as a central processing unit (CPU). The controller 11 may be a system-on-a-chip (SoC) or other type of integrated circuit in which other components are integrated. The controller 11 may be configured by combining a plurality of integrated circuits. The controller 11 implements a variety of functions by controlling overall operation of the electronic device 1.

Specifically, the controller 11 refers as necessary to data stored in the storage 16. The controller 11 implements a variety of functions by executing instructions included in programs stored in the storage 16 to control other functional components, such as the display 14. For example, the controller 11 acquires data indicating contact by the user from the touch panel. The controller 11 also acquires a portion or all of the data detected by the UV sensor 19, the illuminance sensor 20, the acceleration sensor 21, the geomagnetic sensor 22, the barometric pressure sensor 23, and the gyro sensor 24. The controller 11 recognizes the usage conditions of the storage 16. The controller 11 also recognizes the launch status of applications.

The timer 12 receives an instruction for a timer operation from the controller 11. Once a predetermined time has elapsed, the timer 12 outputs a signal indicating that the predetermined time has elapsed to the controller 11. The timer 12 may be provided external to the controller 11, as illustrated in FIG. 1. The timer 12 may instead be provided internally within the controller 11.

The camera 13 captures images of subjects around the electronic device 1. One example of the camera 13 is a front camera provided on the same face as the display 14 of the electronic device 1.

The microphone 15 detects sound around the electronic device 1, including people's voices.

The speaker 25 outputs sound. When, for example, the news, the weather forecast, or the like is read aloud, the speaker 25 outputs the corresponding sound.

The UV sensor 19 can measure the amount of ultraviolet light included in sunlight or other light.

The illuminance sensor 20 detects the illuminance from surrounding light that is incident on the illuminance sensor 20.

The acceleration sensor 21 detects the direction and magnitude of acceleration acting on the electronic device 1. The acceleration sensor 21 is a three-axis (3D) type of sensor that detects acceleration in the x-axis, y-axis, and z-axis directions. The acceleration sensor 21 may be of any type. The acceleration sensor 21 may, for example, be a piezoresistive type. Alternatively, the acceleration sensor 21 may be a capacitive type. The acceleration sensor 21 may also, for example, be a piezoelectric element (piezoelectric type) or a thermal detection type of microelectromechanical system (MEMS). The acceleration sensor 21 may also, for example, be a servo-type of sensor that moves a moveable coil and returns the coil by feedback current. Furthermore, the acceleration sensor 21 may be a strain-gauge type of sensor that uses a strain gauge to measure strain generated by acceleration.

The geomagnetic sensor 22 detects the orientation of the earth's magnetism. For example, the orientation information acquired by the geomagnetic sensor 22 may be the component when the orientation of the electronic device 1 is projected onto a plane parallel to the ground. The orientation information acquired by the geomagnetic sensor 22 is the direction of the electronic device 1.

The barometric pressure sensor 23 detects the barometric pressure (atmospheric pressure) outside of the electronic device 1.

The gyro sensor 24 detects the angular velocity of the electronic device 1. The controller 11 can measure the orientation of the electronic device 1 by integrating the angular velocity, acquired by the gyro sensor 24, over time once.

### Gesture-Based Operation of Electronic Device

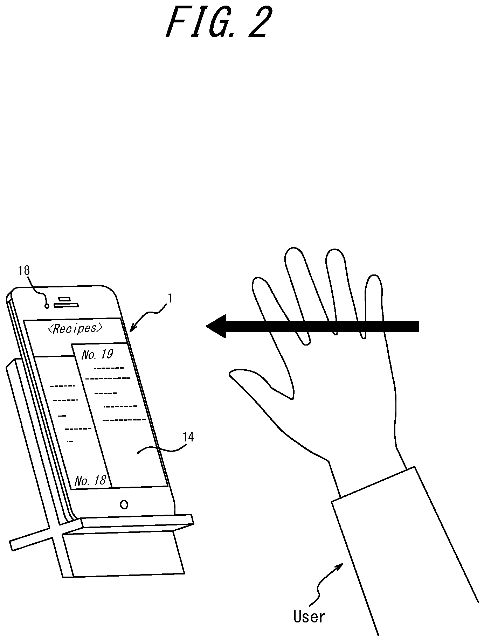

FIG. 2 illustrates the user operating the electronic device 1 with a gesture. In FIG. 2, the electronic device 1 is supported by a stand as an example. Alternatively, the electronic device 1 may be leaned against a wall or placed on a table. Upon the proximity sensor 18 detecting a gesture by the user, the controller 11 executes processing based on the detected gesture. In the example illustrated in FIG. 2, the gesture-based processing is selection of a recipe. For example, when the user makes a gesture by moving a hand from right to left in the transverse direction of the display 14 (in the direction of the arrow in FIG. 2), the recipe displayed on the display 14 changes.

The electronic device 1 in FIG. 2 is a smartphone. Alternatively, the electronic device 1 may, for example, be a mobile phone, a phablet, a tablet PC, a feature phone, or other such device. The electronic device 1 is not limited to these examples and may, for example, also be a personal digital assistant (PDA), a remote control, a portable music player, a game device, an electronic book reader, a car navigation device, a household appliance, an industrial device (factory automation (FA) device), or the like.

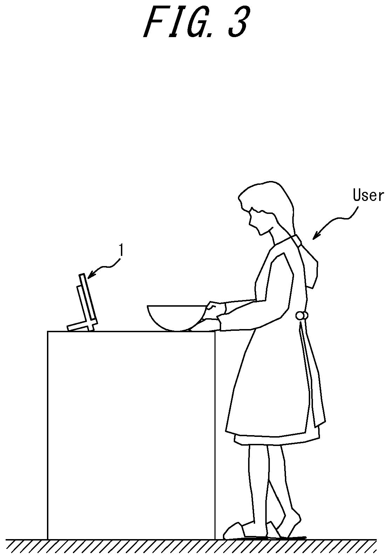

FIG. 3 illustrates example conditions in which the user operates the electronic device 1 with a gesture. In the example in FIG. 3, the user is cooking in the kitchen by following a cooking recipe displayed on the display 14 of the electronic device 1. As mentioned above, the proximity sensor 18 detects a gesture by the user. The controller 11 executes processing based on the gesture detected by the proximity sensor 18. The controller 11 can execute processing to scroll the recipe in response to a particular gesture (such as the user raising or lowering a hand). The user's hand may become dirty or wet during cooking. The user can scroll the recipe with a particular gesture, however, without touching the electronic device 1. The display 14 therefore does not become dirty, and dirt on the display 14 can be prevented from getting on the user's hand during cooking.

The electronic device 1 has a plurality of modes. Modes refer to operation modes (operating states or operation statuses) that, for example, place restrictions on the operations of the entire electronic device 1. Only one mode can be selected at a time. In the present embodiment, the modes of the electronic device 1 include a first mode and a second mode. The second mode is an operation mode (kitchen mode) of the electronic device 1 that is optimal for cooking in the kitchen while a recipe is displayed. When in the second mode, the electronic device 1 can operate the proximity sensor 18 and detect gestures. The electronic device 1 also operates the microphone 15 when in the second mode. The electronic device 1 can then receive audio input using the microphone 15 instead of character input (from a touch panel operation by the user). The first mode is a regular operation mode (regular mode) appropriate for use in rooms other than the kitchen or outside of the home, for example. In the present embodiment, the user sets the electronic device 1 to the second mode (kitchen mode) when cooking in the kitchen. The mode may be easily settable via a notification (notification screen) that appears upon, for example, swiping the edge of the screen. A third mode (abnormality response mode), described below, and the second mode are switched between automatically, without the user performing a manual setting. When in the third mode (abnormality response mode) as well, the electronic device 1 operates the proximity sensor 18 and detects gestures.

The user may need to stop cooking due to a sudden event occurring while the user is cooking. Examples of such an event include caring for a child. For example, the user may be cooking after putting a child to sleep in a crib or the like. If the child wakes up and starts to cry, it is preferable to respond immediately, but the user may be delayed in responding if the user first cleans off her hands. The response may be further delayed when the kitchen and the room with the crib are separate.

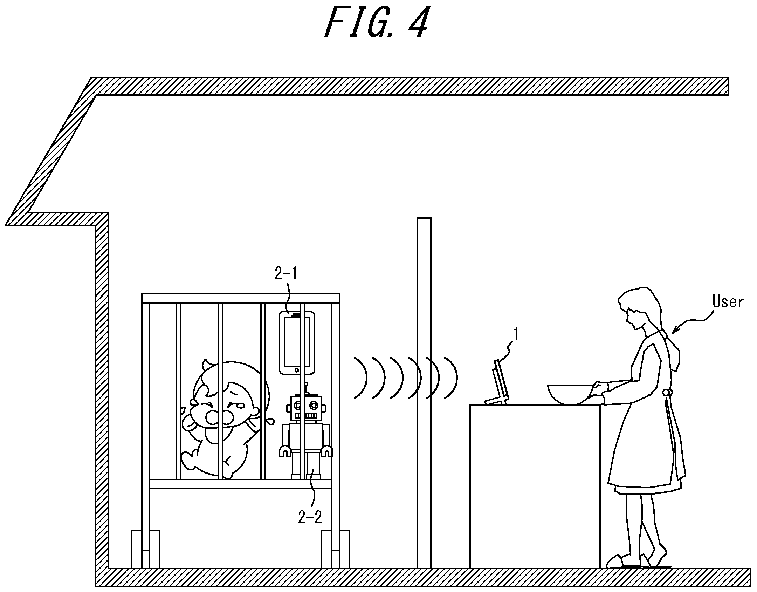

FIG. 4 illustrates example conditions in which the electronic device 1 of the present embodiment is used along with external devices 2-1, 2-2. The external devices 2-1, 2-2 illustrated in FIG. 4 are devices used to recognize the state of a child and to care for the child. In the example in FIG. 4, the external device 2-1 (first external device) is placed in the crib mainly to recognize the state of the child. The external device 2-2 (second external device) has the appearance of a toy and is placed in the crib mainly to calm the child.

The external devices 2-1, 2-2 in FIG. 4 communicate with the electronic device 1. The external devices 2-1, 2-2 operate in accordance with instructions from the electronic device 1. The electronic device 1 receives signals output by the external devices 2-1, 2-2. The signals output by the external devices 2-1, 2-2 can be used in the control of the electronic device 1. The external devices 2-1, 2-2 are also a type of electronic device but are referred to by this name in the present disclosure for differentiation from the electronic device 1 used by the user.

### Configuration of External Device

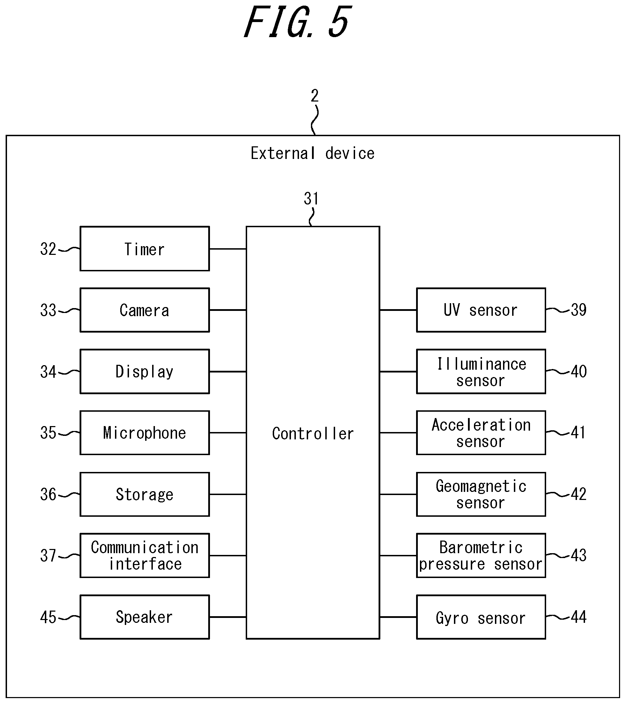

The schematic configuration of the external devices 2-1, 2-2 (referred to as "external device 2" when not differentiating therebetween) is now described. As illustrated in FIG. 5, the external device 2 may include a camera 33, a display 34, a microphone 35, a storage 36, a communication interface 37, a speaker 45, and a controller 31. The external device 2 may further include a timer 32, a UV sensor 39, an illuminance sensor 40, an acceleration sensor 41, a geomagnetic sensor 42, a barometric pressure sensor 43, and a gyro sensor 44. FIG. 5 is only an example, and the external devices 2-1, 2-2 need not include all of the components in FIG. 5. Also, the external devices 2-1, 2-2 may include components other than those illustrated in FIG. 5. For example, in the present embodiment, the external device 2-2 that has the appearance of a toy need not include the display 34, the microphone 35, the UV sensor 39, the illuminance sensor 40, the acceleration sensor 41, and the geomagnetic sensor 42. Furthermore, the external device 2-2 may include a motor for moving the legs or arms. In this case, the motor is controlled by the controller 31.

The camera 33 captures images of subjects around the external device 2. One example of the camera 33 is a front camera provided on the same face as the display 34. In the present embodiment, the camera 33 captures still or moving images (simply "images" below) of the child in the crib. The captured images can be outputted to the electronic device 1 through the communication interface 37.

The display 34 displays a screen. In the present embodiment, the external device 2 can acquire images captured by the electronic device 1 through the communication interface 37 and display the images on the display 34. The display 34 may be an LCD, an organic EL panel, an inorganic EL panel, or the like. The display 34 may also be a touchscreen display.

The microphone 35 detects sound around the external device 2. In the present embodiment, the microphone 35 particularly detects the voice of a child around the external device 2.

The storage 36 functions as a memory storing programs and data. The storage 36 temporarily stores the processing results of the controller 31. The programs stored in the storage 36 include applications that run in the foreground or the background and a control program that supports operations of the applications. For example, the applications cause the controller 31 to execute processing to operate the camera 33, the display 34, the microphone 35, and the speaker 45 to implement the functions of a videophone. The control program is, for example, an OS.

The communication interface 37 is for communicating over a wired or wireless connection. The communication method of the communication interface 37 in an embodiment is prescribed by a wireless communication standard. For example, a cellular phone communication standard such as 2G, 3G, or 4G may be used as the wireless communication standard. Examples of cellular phone communication standards include LTE, W-CDMA, CDMA2000, PDC, GSM®, and PHS. Examples of wireless communication standards include WiMAX, IEEE 802.11, Bluetooth®, IrDA, and NFC. The communication interface 37 may support one or more of the aforementioned communication standards. In the present embodiment, the communication interface 37 of the external devices 2-1, 2-2 supports IEEE 802.11 and Bluetooth®. The communication interface 37 of the external device 2-1 also supports cellular phone communication standards.

The speaker 45 outputs sound. In the present embodiment, the speaker 45 particularly outputs audio from the electronic device 1 (such as the voice of the user of the electronic device 1).

The controller 31 is a processor such as a central processing unit (CPU). The controller 31 may be a system-on-a-chip (SoC) or other type of integrated circuit in which other components are integrated. The controller 31 may be configured by combining a plurality of integrated circuits. The controller 31 implements a variety of functions by controlling overall operation of the external device 2. In the present embodiment, the controller 31 generates an abnormality notification signal upon detecting an abnormality, i.e. a condition that the user should respond to urgently. For example, the controller 31 detects an abnormality when the child, whose voice is detected with the microphone 35, is crying. The controller 31 then transmits the abnormality notification signal to the electronic device 1. The controller 31 implements the functions of the external device 2 in accordance with instructions from the electronic device 1.

The timer 32, the UV sensor 39, the illuminance sensor 40, the acceleration sensor 41, the geomagnetic sensor 42, the barometric pressure sensor 43, and the gyro sensor 44 are respectively similar to the timer 12, the UV sensor 19, the illuminance sensor 20, the acceleration sensor 21, the geomagnetic sensor 22, the barometric pressure sensor 23, and the gyro sensor 24 of the electronic device 1.

Referring again to FIG. 4, the electronic device 1 can communicate with the external devices 2-1, 2-2 having the above configuration and remotely operate the external devices 2-1, 2-2. The communication interface 17 of the electronic device 1 in the present embodiment communicates with the external devices 2-1, 2-2 in accordance with IEEE 802.11, for example. Alternatively, the communication interface 17 may communicate with the external devices 2-1, 2-2 by Bluetooth®. The electronic device 1 also can place a telephone call to the external device 2-1 using a cellular phone communication standard.

When the abnormality notification signal is acquired from the external device 2-1 through the communication interface 17 of the electronic device 1, the controller 11 of the electronic device 1 provides an instruction to the external device 2-1 or the external device 2-2 based on a gesture detected by the proximity sensor 18. The abnormality notification signal is a signal to notify the user of a condition that the user should respond to urgently. The abnormality notification signal in the present embodiment is a signal to provide notification that the child is crying and needs care (i.e. a response such as talking to and soothing the child). The user can remotely operate the external devices 2-1, 2-2 with a gesture. The user can also place a telephone call to the external device 2-1 with a gesture. The user who is cooking can therefore care for the child with a gesture, without touching the electronic device 1, while still in the kitchen.

### Gesture Processing Information

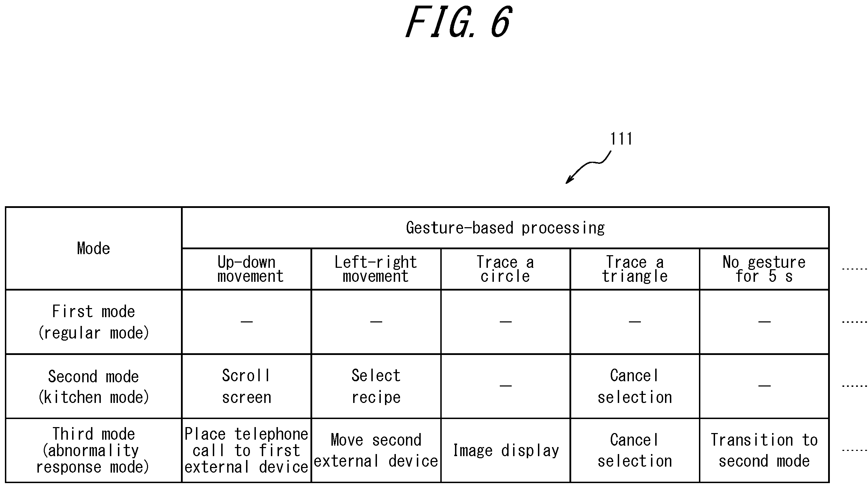

FIG. 6 illustrates an example of gesture processing information 111 stored in the storage 16. The gesture processing information 111 is a table prescribing gesture-based processing corresponding to modes. The gesture processing information 111 is stored in the storage 16. The gesture processing information 111 is read from the storage 16 by the controller 11 and is used by the controller 11 to switch gesture-based processing.

In the present embodiment, the gesture processing information 111 includes the items "mode" and "gesture-based processing".

The "mode" is the operation mode of the electronic device 1. As illustrated in FIG. 6, the electronic device 1 includes a first mode (regular mode), a second mode (kitchen mode), and a third mode (abnormality response mode). In the second mode (kitchen mode) and the third mode (abnormality response mode), the user causes the controller 11 to execute gesture-based processing. No gesture-based processing is executed when the electronic device 1 is in the first mode (regular mode). Processing is executed by contact operations on the touch panel, rather than by gesture, when the electronic device 1 is in the first mode (regular mode). The electronic device 1 can transition from the second mode (kitchen mode) to the third mode (abnormality response mode). When processing in the third mode (abnormality response mode) is complete, the electronic device 1 transitions to the second mode (kitchen mode). In other words, the electronic device 1 does not transition from the first mode (regular mode) to the third mode (abnormality response mode). The electronic device 1 does not transition from the third mode (abnormality response mode) to the first mode (regular mode), either.

The "gesture-based processing" indicates processing executed by the controller 11 based on a gesture detected by the proximity sensor 18. The controller 11 scrolls the screen displayed on the display 14 when an up-down gesture is detected while the electronic device 1 is in the second mode. The controller 11 executes recipe selection processing when a left-right gesture is detected while the electronic device 1 is in the second mode. The controller 11 cancels the user's immediately prior selection (such as screen scrolling) when a gesture to trace a triangle is detected while the electronic device 1 is in the second mode.

When the user is going to cook in the kitchen while displaying a recipe, the user sets the electronic device 1 to the second mode (kitchen mode) via a notification, for example. The electronic device 1 operating in the second mode (kitchen mode) transitions to the third mode (abnormality response mode) upon acquiring an abnormality notification signal from the external device 2-1 through the communication interface 17. The controller 11 places a telephone call to the external device 2-1 (first external device) when an up-down gesture is detected while the electronic device 1 is in the third mode. At this time, the user can talk to and soothe the crying child.

The controller 11 moves the external device 2-2 (second external device) when a left-right gesture is detected while the electronic device 1 is in the third mode. In the present embodiment, the external device 2-2 has the appearance of a toy. The user can therefore move the toy to make the child stop crying.

The controller 11 performs image display when a gesture to trace a circle is detected while the electronic device 1 is in the third mode. The image display is processing for at least one of causing the display 14 of the electronic device 1 to display an image captured by the camera 33 of the external device 2 and causing the display 34 of the external device 2 to display an image captured by the camera 13 of the electronic device 1. In the present embodiment, the electronic device 1 performs bidirectional image display with the external device 2-1. The external device 2-2 does not include the display 34. The electronic device 1 performs one directional image display with the external device 2-2 to display images captured by the camera 33 of the external device 2-2 on the display 14.

The controller 11 cancels the user's immediately prior selection (such as placing a telephone call to the external device 2-1) when a gesture to trace a triangle is detected while the electronic device 1 is in the third mode. The controller 11 transitions the mode of the electronic device 1 to the second mode (kitchen mode) when the proximity sensor 18 does not detect a gesture for a certain length of time while the electronic device 1 is in the third mode. The certain length of time is 5 s in the present embodiment but may be any other length of time, such as 20 s.

The electronic device 1 operating in the third mode (abnormality response mode) may execute a plurality of types of gesture-based processing. In the present embodiment, the electronic device 1 may detect an up-down gesture and a gesture to trace a circle and may execute a videophone function between the electronic device 1 and the external device 2-1.

### Flowchart

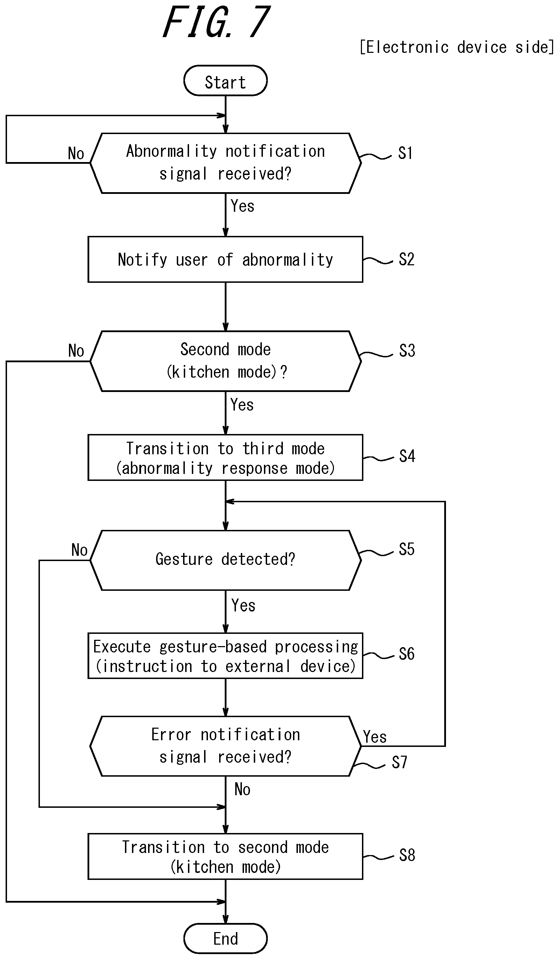

FIG. 7 is a flowchart illustrating an example of gesture-based processing executed by the controller 11 of the electronic device 1 according to the present embodiment.

The controller 11 judges whether an abnormality has occurred, i.e. whether an abnormality notification signal has been received from the external device 2-1 (step S1). If no abnormality has occurred, the controller 11 stands by (step S1: No).

When an abnormality notification signal has been received (step S1: Yes), the controller 11 notifies the user of the abnormality (step S2). The user may be notified of the abnormality by, for example, the display 14 displaying an indication that an abnormality has occurred. The user may also be notified of the abnormality by, for example, the speaker 25 outputting a warning sound or warning message as audio. The message "the child is crying", for example, may be displayed on the display 14 or outputted as audio from the speaker 25.

The controller 11 determines whether the mode of the electronic device 1 is the second mode (kitchen mode) (step S3). When the mode is the first mode (regular mode), i.e. not the second mode (kitchen mode) (step S3: No), the controller 11 ends the processing sequence. The user's hand is not dirty or wet at this time, since the user is not cooking. Hence, the user can immediately move to the location of the child and respond.

When the mode of the electronic device 1 is the second mode (kitchen mode) (step S3: Yes), the controller 11 proceeds to step S4.

The controller 11 transitions the mode of the electronic device 1 from the second mode (kitchen mode) to the third mode (abnormality response mode) (step S4). Here, the controller 11 reads the gesture processing information 111 from the storage 16 (see FIG. 6). The content of the gesture-based processing switches as a result of the transition to the third mode.

When a gesture is not detected for a certain length of time (such as 5 s) (step S5: No), the controller 11 proceeds to the processing of step S8. When a gesture is detected (step S5: Yes), the controller 11 executes gesture-based processing (step S6). The gesture-based processing at this time provides an instruction to the external device 2-1 (first external device) or the external device 2-2 (second external device).

The controller 11 judges whether an error notification signal has been received from the external device 2-1 or the external device 2-2 (step S7). The error notification signal is a signal, transmitted to the electronic device 1, indicating an execution error when the external device 2-1 or the external device 2-2 cannot execute the received instruction. When an error notification signal has been received (step S7: Yes), the controller 11 returns to the processing of step S5 and detects a new gesture by the user. At this time, the controller 11 may notify the user of at least one of receipt of the error notification signal and the need for a new gesture.

When the instruction has been executed, i.e. when an error notification signal has not been received (step S7: No), the controller 11 transitions the mode of the electronic device 1 to the second mode (kitchen mode) (step S8). The controller 11 then ends the processing sequence.

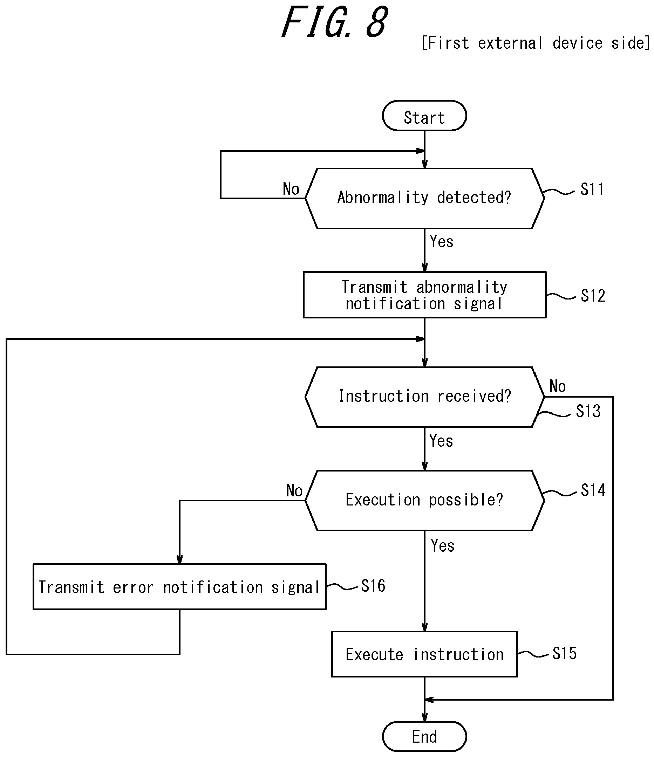

The flowchart of FIG. 8 illustrates an example of processing executed by the controller 31 of the external device 2-1 (first external device) that receives an instruction, such as remote operation or a telephone call, from the electronic device 1 according to the present embodiment. The external device 2-1 is, for example, a smartphone. Alternatively, the external device 2-1 may be a mobile phone terminal, a phablet, a tablet PC, a feature phone, a pet camera, a wireless network camera with a calling function, or the like.

The controller 31 of the external device 2-1 stands by while an abnormality is not detected (step S11: No). In the present embodiment, the controller 31 is placed in a crib along with a child and detects whether an abnormality has occurred with regard to the child. The abnormality is, for example, that the child has started crying. In the present embodiment, the microphone 35 of the external device 2-1 is always on. The controller 31 judges whether the voice detected by the microphone 35 is crying.

When the controller 31 of the external device 2-1 detects an abnormality (step S11: Yes), the controller 31 transmits an abnormality notification signal to the electronic device 1 (step S12).

The controller 31 of the external device 2-1 judges whether an instruction from the electronic device 1, such as remote operation or a telephone call, has been received (step S13). When no instruction from the electronic device 1 has been received (step S13: No), the controller 31 of the external device 2-1 ends the processing sequence. The remote operation instruction from the electronic device 1 may, for example, be to output audio (such as the user's voice) from the electronic device 1 through the speaker 45. The remote operation instruction from the electronic device 1 may, for example, be to cause the display 34 to display a video, stored in the storage 36, that the child likes.

When an instruction has been received from the electronic device 1 (step S13: Yes), the controller 31 of the external device 2-1 judges whether the instruction can be executed (step S14). For example, suppose that an instruction to execute the videophone function has been received from the electronic device 1. At this time, if the camera 33 is not facing the child and cannot easily capture images of the child, for example, the controller 31 of the external device 2-1 judges that the instruction cannot be executed (step S14: No). The controller 31 of the external device 2-1 then transmits an error notification signal to the electronic device 1 (step S16). Subsequently, the controller 31 of the external device 2-1 returns to the processing of step S13.

When the controller 31 of the external device 2-1 judges that an instruction from the electronic device 1 can be executed (step S14: Yes), the controller 31 executes the instruction and ends the processing sequence (step S15).

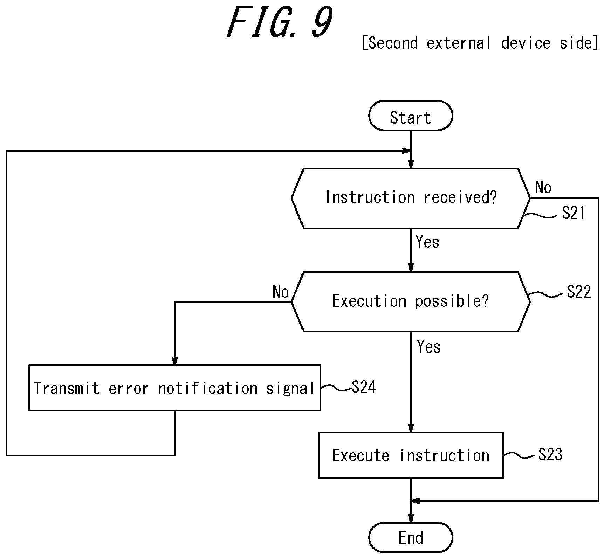

The flowchart of FIG. 9 illustrates an example of processing executed by the controller 31 of the external device 2-2 (second external device) that receives an instruction, such as remote operation or a telephone call, from the electronic device 1 according to the present embodiment. The external device 2-2 is a toy, such as a remotely controllable robot, car, or the like. In the present embodiment, the external device 2-2 does not include a calling function (microphone 35) or a display function (display 34).

The controller 31 of the external device 2-2 judges whether an instruction from the electronic device 1, such as remote operation, has been received (step S21). When no instruction from the electronic device 1 has been received (step S21: No), the controller 31 of the external device 2-2 ends the processing sequence.

When an instruction has been received from the electronic device 1 (step S21: Yes), the controller 31 of the external device 2-2 judges whether the instruction can be executed (step S22). For example, suppose that an activation instruction has been received from the electronic device 1. At this time, if the battery level is insufficient for activation and operation, for example, the controller 31 of the external device 2-2 judges that the instruction cannot be executed (step S22: No). The controller 31 of the external device 2-2 then transmits an error notification signal to the electronic device 1 (step S24). Subsequently, the controller 31 of the external device 2-2 returns to the processing of step S21.

When the controller 31 of the external device 2-2 judges that an instruction from the electronic device 1 can be executed (step S22: Yes), the controller 31 executes the instruction and ends the processing sequence (step S23).

As described above, the electronic device 1 according to the present embodiment judges that a condition the user should respond to urgently has occurred when the electronic device 1 communicates with the external device 2 and acquires an abnormality notification signal from the external device 2. The electronic device 1 that was operating in the second mode (kitchen mode) then transitions to the third mode (abnormality response mode). The electronic device 1 operating in the third mode (abnormality response mode) can execute gesture-based processing that differs from the default state (recipe display) on the basis of the gesture processing information 111. The electronic device 1 can not only receive notification of the occurrence of an abnormality from the external device 2 but can also immediately respond by remotely operating or placing a telephone call to the external device 2 based on a gesture. In other words, the user of the electronic device 1 according to the present embodiment can provide an emergency response without having to interrupt gesture-based input operations. The time lag until implementation of the emergency response can therefore be reduced. The electronic device 1 according to the present embodiment enables various operations in accordance with a variety of conditions to be performed consistently with gestures and therefore has improved operability.

### Other Embodiments

Although the subject matter of the present disclosure has been described with reference to the drawings and embodiments, it is to be noted that various changes and modifications will be apparent to those skilled in the art on the basis of the present disclosure. Therefore, such changes and modifications are to be understood as included within the scope of the present disclosure. For example, the functions and the like included in the various components, steps, and the like may be reordered in any logically consistent way. Furthermore, components, steps, and the like may be combined into one or divided.

In the above embodiment, the electronic device 1 communicates with and provides instructions to two external devices 2-1, 2-2. The electronic device 1 may communicate with only one external device 2 instead. Alternatively, the electronic device 1 may communicate with three or more external devices 2. The electronic device 1 may communicate with one external device 2 capable of communicating with other external devices 2. For example, when the external device 2-1 is capable of communicating with the external device 2-2, the electronic device 1 may communicate with only the external device 2-1. At this time, the controller 11 of the electronic device 1 can remotely operate the external device 2-2 via the external device 2-1. For example, when the communication range of the external device 2-2 is limited to a close distance (such as several meters), the electronic device 1 can operate the external device 2-2 via the external device 2-1 from a location outside of the communication range of the external device 2-2. In the above embodiment, the configuration of the external device 2-2 differs from the configuration of the external device 2-1 with regards, for example, to inclusion of the display 34. However, a plurality of external devices 2 may each have the same configuration.

In the above embodiment, the second mode (kitchen mode) is set by user operation via a notification (notification screen). The controller 11 may set the electronic device 1 to the second mode automatically when a predetermined condition is satisfied. For example, the controller 11 judges that a first condition is satisfied when an application displaying a recipe is being executed, or when a recipe site is being viewed. The controller 11 may set the electronic device 1 to the second mode when judging that the first condition is satisfied and that a recipe is not currently being selected (for example, when the recipe is not changed for a certain length of time, such as 30 seconds). The controller 11 may set the electronic device 1 to the second mode when judging that the first condition is satisfied and that the user has not operated the touch panel for at least a certain length of time (such as one minute). The controller 11 may set the electronic device 1 to the second mode when the first condition is satisfied and the electronic device 1 has not changed position for at least a certain length of time (such as one minute).

In the above embodiment, the external device 2-1 detects an abnormality with regards to a child (such as crying). The external device 2-1 may detect an abnormality in something other than a child (such as a pet). Furthermore, the external device 2-1 may detect an abnormality not only from a change in audio but also from a change in video.

In the above embodiment, a voice call (placing a telephone call) and image display are associated with different gestures when the electronic device 1 is in the third mode (abnormality response mode). Alternatively, a videophone function may be associated with one gesture.

In the above embodiment, the electronic device 1 associates one gesture with one type of processing. Alternatively, the electronic device 1 may associate one gesture with the display of a screen for selecting processing. For example, when the proximity sensor 18 detects a left-right gesture while the electronic device 1 is in the third mode (abnormality response mode), the options "place telephone call to first external device", "move second external device", and "image display" may be displayed on the screen. The user may then be able to select one type of processing with an upward gesture or a downward gesture. The options for processing after receipt of the error notification signal may be hidden, or user selection may be disabled. This allows the final determination of processing to be made from among more choices.

Much of the subject matter of the present disclosure is described as a series of operations executed by a computer system and other hardware that can execute program instructions. Examples of the computer system and other hardware include a general-purpose computer, a personal computer (PC), a dedicated computer, a workstation, a personal communications system (PCS), a mobile (cellular) phone, a mobile phone with a data processing function, an RFID receiver, a game device, an electronic notepad, a laptop computer, a global positioning system (GPS) receiver, and other programmable data processing apparatuses. It should be noted that in each embodiment, various operations or control methods are executed by a dedicated circuit (for example, individual logical gates interconnected in order to execute a particular function) implemented by program instructions (software), or by a logical block and/or program module or the like executed by one or more processors. The one or more processors that execute a logical block, program module, or the like include, for example, one or more of a microprocessor, CPU, application specific integrated circuit (ASIC), digital signal processor (DSP), programmable logic device (PLD), field programmable gate array (FPGA), processor, controller, microcontroller, microprocessor, electronic device, other apparatus designed to be capable of executing the functions disclosed here, and/or a combination of any of the above. The embodiments disclosed here are, for example, implemented by hardware, software, firmware, middleware, microcode, or a combination of any of these. The instructions may be program code or a code segment for executing the necessary tasks. The instructions may be stored on a machine-readable, non-transitory storage medium or other medium. The code segment may indicate a combination of any of the following: procedures, functions, subprograms, programs, routines, subroutines, modules, software packages, classes, instructions, data structures, or program statements. The code segment may transmit and/or receive information, data arguments, variables, or memory content to or from another code segment or hardware circuit in order for the code segment to connect to another code segment or hardware circuit.

The storage 16 used here may also be configured as a computer-readable, tangible carrier (medium) in any of the categories of solid-state memory, magnetic disks, and optical discs. Data structures or an appropriate set of computer instructions, such as program modules, for causing a processor to execute the techniques disclosed herein are stored on these media. Examples of computer-readable media include an electrical connection with one or more wires, a magnetic disk storage medium, a magnetic cassette, a magnetic tape, or other magnetic or optical storage medium, such as a compact disc (CD), laser disc®, digital versatile disc (DVD®), floppy® disk, and Blu-ray disc® (laser disc, DVD, floppy, and Blu-ray disc are registered trademarks in Japan, other countries, or both). Further examples include a portable computer disk, random access memory (RAM), read-only memory (ROM), rewritable programmable ROM such as erasable programmable read-only memory (EPROM), electrically erasable programmable read-only memory (EEPROM), or flash memory, another tangible storage medium that can store information, or a combination of any of these. The memory may be provided internal and/or external to a processor or processing unit. As used in the present disclosure, the term "memory" refers to all types of long-term storage, short-term storage, and volatile, non-volatile, or other memory. In other words, the "memory" is not limited to a particular type or number. The type of medium on which information is stored is not limited, either.

### REFERENCE SIGNS LIST

- 1: Electronic device
- 2: External device
- 11: Controller
- 12: Timer
- 13: Camera
- 14: Display
- 15: Microphone
- 16: Storage
- 17: Communication interface
- 18: Proximity sensor
- 19: UV sensor
- 20: Illuminance sensor
- 21: Acceleration sensor
- 22: Geomagnetic sensor
- 23: Barometric pressure sensor
- 24: Gyro sensor
- 25: Speaker
- 31: Controller
- 32: Timer
- 33: Camera
- 34: Display
- 35: Microphone
- 36: Storage
- 37: Communication interface
- 39: UV sensor
- 40: Illuminance sensor
- 41: Acceleration sensor
- 42: Geomagnetic sensor
- 43: Barometric pressure sensor
- 44: Gyro sensor
- 45: Speaker
- 111: Gesture processing information

## Claims

1. An electronic device comprising:
a proximity sensor;
a communication interface configured to communicate with an external device; and
a controller configured, when an abnormality notification signal is acquired from the external device by the communication interface, to transmit a signal for remotely operating the external device based on a gesture detected by the proximity sensor.

2. An electronic device comprising:
a proximity sensor;
a communication interface configured to communicate with an external device; and
a controller configured, when an abnormality notification signal is acquired from the external device by the communication interface, to place a telephone call to the external device based on a gesture detected by the proximity sensor.

3. The electronic device of claim 1 or 2,
wherein the external device comprises a first external device and a second external device; and
wherein the controller remotely operates the second external device via the first external device.

4. A program for an electronic device comprising a proximity sensor and a communication interface configured to communicate with an external device, the program causing the electronic device to:
acquire, using the communication interface, an abnormality notification signal from the external device; and
transmit a signal for remotely operating the external device based on a gesture detected by the proximity sensor.

5. A program for an electronic device comprising a proximity sensor and a communication interface configured to communicate with an external device, the program causing the electronic device to:
acquire, using the communication interface, an abnormality notification signal from the external device; and
place a telephone call to the external device based on a gesture detected by the proximity sensor.

6. A control method of an electronic device comprising a proximity sensor and a communication interface configured to communicate with an external device, the control method comprising:
acquiring, using the communication interface, an abnormality notification signal from the external device; and
transmitting a signal for remotely operating the external device based on a gesture detected by the proximity sensor.

7. A control method of an electronic device comprising a proximity sensor and a communication interface configured to communicate with an external device, the control method comprising:
acquiring, using the communication interface, an abnormality notification signal from the external device; and
placing a telephone call to the external device based on a gesture detected by the proximity sensor.
